# EUROPEAN PATENT APPLICATION

(11) **EP 3 396 519 A1**
(43) Date of publication of application: **31.10.2018**
(21) Application number: 18168879.7
(22) Date of filing: 24.04.2018
(51) Int. Cl.: G06F 3/0488, G06F 1/16

(54) **TERMINAL AND DISPLAY CONTROL METHOD**

(30) Priority: 24.04.2017 CN 201710271898
(71) Applicant: Beijing Xiaomi Mobile Software Co., Ltd., Beijing 100085 (CN)
(72) Inventor: ZHU, Yin, Beijing, Beijing 100085 (CN)
(74) Representative: dompatent von Kreisler Selting Werner - Partnerschaft von Patent- und Rechtsanwälten mbB

(57) **Abstract**

There is provided a terminal and a display control method. The terminal includes: a display screen and a middle frame. The display screen includes a first display area and a second display area. The left edge of the display screen is coupled with the left border of the middle frame, and the right edge of the display screen is coupled with the right border of the middle frame, and the lower edge of the display screen is coupled with the lower border of the middle frame. The first upper edge of the first display area is the upper edge of the display screen. The second lower edge of the second display area is the lower edge of the display screen. The first lower edge of the first display are is the second upper edge of the second display area.

## Description

### TECHNICAL FIELD

The present disclosure relates to a terminal and a display control method.

### BACKGROUND

The appearance of a smart phone usually includes a front panel, a middle frame and a rear cover. The front panel is usually provided with a screen, a front camera, an earphone, a distance sensor, an optical sensor and so on.

The development trend of smart phones is to increase the screen occupation ratio of the screen on the front panel. In the related art, the screen occupation ratio of the screen on the front panel is increased by narrowing the distance between the left edge of the screen and the left border of the middle frame and the distance between the right edge of the screen and the right border of the middle frame. Since the upper area of the screen is usually provided with a front camera, an earphone, a distance sensor, an optical sensor and so on, usually components with small volumes are employed to narrow the upper area of the screen. However, the area where the components on the upper area of the screen are cannot completely replace the screen. In addition, since the lower area of the screen is usually used as a key area, it usually cannot be reduced. Due to the limitation of hardware, it is hard to further increase the screen occupation ratio of the screen.

### SUMMARY

Embodiments of the present disclosure provide a terminal and a display control method.

In a first aspect, there is provided a terminal. The terminal includes: a display screen and a middle frame. The display screen includes a first display area and a second display area, and the middle frame includes an upper border, a left border, a lower border and a right border coupled sequentially. A left edge of the display screen is coupled with the left border of the middle frame, and a right edge of the display screen is coupled with the right border of the middle frame. A lower edge of the display screen is coupled with the lower border of the middle frame. A first upper edge of the first display area is an upper edge of the display screen, a second lower edge of the second display area is the lower edge of the display screen, and a first lower edge of the first display area is a second upper edge of the second display area. A length of a first left edge of the first display area equals to that of a first right edge thereof, a length of a second left edge of the second display area equals to that of a second right edge thereof, and the length of the first left edge is greater than that of the second left edge.

In a second aspect, there is provided a display control method for a terminal with a display screen. The display screen includes a first display area and a second display area. A first upper edge of the first display area is an upper edge of the display screen, a second lower edge of the second display area is a lower edge of the display screen, the lower edge of the display screen is coupled with a lower border of a middle frame of the terminal, and a first lower edge of the first display area is a second upper edge of the second display area. The method includes: displaying a virtual key in the second display area when the first display area is in an operating state; receiving a control signal through the virtual key; and controlling the first display area to display a user interface corresponding to the virtual key in accordance with the control signal.

There are also provided in other aspects of the disclosure some terminals and display control methods.

By means of dividing the display screen of the terminal into the first display area and the second display area and coupling the second lower edge of the second display area to the lower border of the middle frame, the second display area replaces the key area, such that the screen occupation ratio of the front panel of the terminal is increased. In addition, an independent display function of the second display area can be realized by means of software design when the first display area is turned off, satisfying the display requirements by the user of small functions such as time display and saving the power consumption of the terminal. At the same time, since the display screen is a touch control screen, a key function of the second display area can be realized by means of software design. A control signal can be generated by an operation acting on the second display area to control predetermined operations performed in the first display area such as screen lighting, interface switch and so on, thus realizing linked operations between the first display area and the second display area and enriching the form of screen interaction.

### BRIEF DESCRIPTION OF THE DRAWINGS

In order to explain the technical solutions in the examples of the present disclosure more clearly, the drawings used in the descriptions of the examples will be briefly introduced hereinafter. Apparently, the drawings described hereinafter are merely some examples of the present disclosure, and a person of ordinary skill in the art may also obtain other drawings in accordance with these drawings without creative efforts.
Fig. 1 is a structural schematic diagram of a terminal shown in accordance with an example;
Fig. 2 is a structural schematic diagram of a terminal shown in accordance with another example;
Fig. 3 is a structural schematic diagram of a terminal shown in accordance with yet another example;
Fig. 4 is a structural schematic diagram of a terminal shown in accordance with yet another example;
Fig. 5 is a structural schematic diagram of a terminal shown in accordance with yet another example;
Fig. 6 is a structural schematic diagram of a terminal shown in accordance with yet another example;
Fig. 7 is a flow chart of a display control method shown in accordance with an example;
Fig. 8 is a schematic diagram of an interface when a display control method is implemented shown in accordance with an example.

### DETAILED DESCRIPTION

In order to make the objects, technical solutions and advantages of the present disclosure clearer, examples of the present disclosure will be described in detail hereinafter with reference to the enclosed drawings.

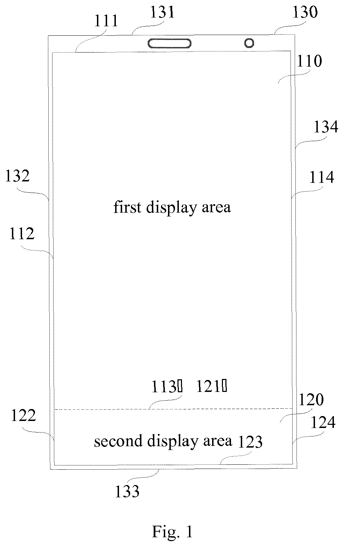

Fig. 1 is a structural schematic diagram of a terminal shown in accordance with an example. As shown in Fig. 1, the terminal may include a display screen which may include a first display area 110 and a second display area 120.

The first display area 110 may include a first upper edge 111, a first left edge 112, a first lower edge 113 and a first right edge 114. The second display area 120 may include a second upper edge 121, a second left edge 122, a second lower edge 123 and a second right edge 124.

The first upper edge 111 of the first display area 110 may be an upper edge of the display screen. The second lower edge 123 of the second display area 120 may be a lower edge of the display screen. The first lower edge 113 of the first display area 110 may be the second upper edge 121 of the second display area 120.

The length of the first left edge 112 of the first display area 110 equals to that of the first right edge 114. The length of the second left edge 122 of the second display area 120 equals to that of the second right edge 124. The length of the first left edge 112 is greater than that of the second left edge 122.

Additionally, the terminal may further include a middle frame 130 which may include an upper border 131, a left border 132, a lower border 133 and a right border 134 coupled sequentially.

The left edge of the display screen may be coupled with the left border 132 of the middle frame 130. The right edge of the display screen may be coupled with the right border 134 of the middle frame 130. That is, the first left edge 112 of the first display area 110 may be coupled with the left border 132 of the middle frame 130, the first right edge 114 of the first display area 110 may be coupled with the right border 134 of the middle frame 130, the second left edge 122 of the second display area 120 may be coupled with the left border 132 of the middle frame 130, and the second right edge 124 of the second display area 120 may be coupled with the right border 134 of the middle frame 130.

"Being coupled" in the examples of the present disclosure may be interpreted as being connected or contacting. For example, the left edge of the display screen is connected to the left border 132 of the middle frame 130. Alternately, the left edge of the display screen contacts the left border 132 of the middle frame 130, but they are not fixedly connected. The back of the display screen is fixedly connected to the frame body of the middle frame.

The lower edge of the display screen may be coupled with the lower border 133 of the middle frame 130. That is, the second lower edge 123 of the second display area 120 may be coupled with the lower border 133 of the middle frame 130.

Since the length of the first left edge 112 is greater than that of the second left edge 122, the area of the first display area 110 is greater than that of the second display area 120.

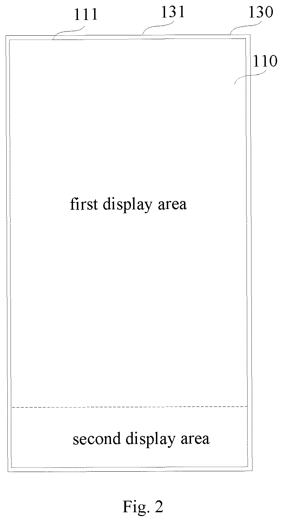

Referring to Fig. 2, which is a structural schematic diagram of a terminal shown in accordance with an example. As shown in Fig. 2, the upper edge of the display screen of the terminal may be coupled with the upper border 131 of the middle frame 130. That is, the first upper edge 111 of the first display area 110 may be coupled with the upper border 131 of the middle frame 130.

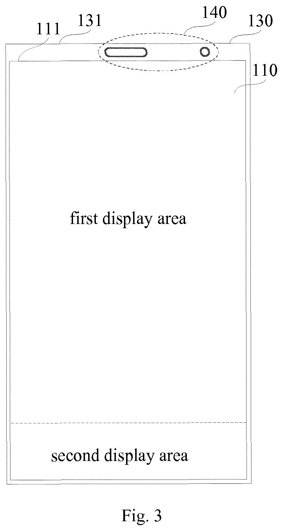

Referring to Fig. 3, the front panel of the terminal may also include other components 140 which include at least one of a front camera, an earphone, a microphone, a distance sensor and an optical sensor. Exemplarily, other components 140 in Fig. 3 are provided between the upper edge of the display screen and the upper border 131 of the middle frame 130. That is, other components 140 are provided between the first upper edge 111 of the first display area 110 and the upper frame 131 of the middle frame 130.

In other possible implementations, other components 140 may be provided at other locations on the front panel of the terminal, which is not limited to being between the first upper edge 111 and the upper border 131 of the middle frame 130.

In some embodiments, the display screen may be an organic light-emitting diode (OLED) screen.

The OLED screen has characteristics of self light-emitting, wide-viewing angle, low power consumption and rapid response speed. Generally, during the display of the OLED screen, merely displaying and light-emitting areas consume power and other light non-emitting areas do not consume power. Thus, when the second display area 120 is in an operating state for a long period of time, power consumption can be reduced by using the OLED screen.

Referring to Fig. 1, the display screen may be rectangular. Then the first display area 110 may be rectangular and the second display area 120 may be rectangular.

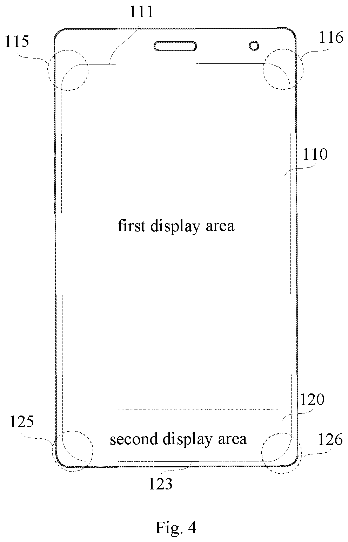

In some embodiments, four vertex angles of the display screen are rounded angles. Referring to Fig. 4, a vertex angle 115 and a vertex angle 116 corresponding to the first upper edge 111 of the first display area 110 are rounded angles, and a vertex angle 125 and a vertex angle 126 corresponding to the second lower edge 123 of the second display area 120 are rounded angles.

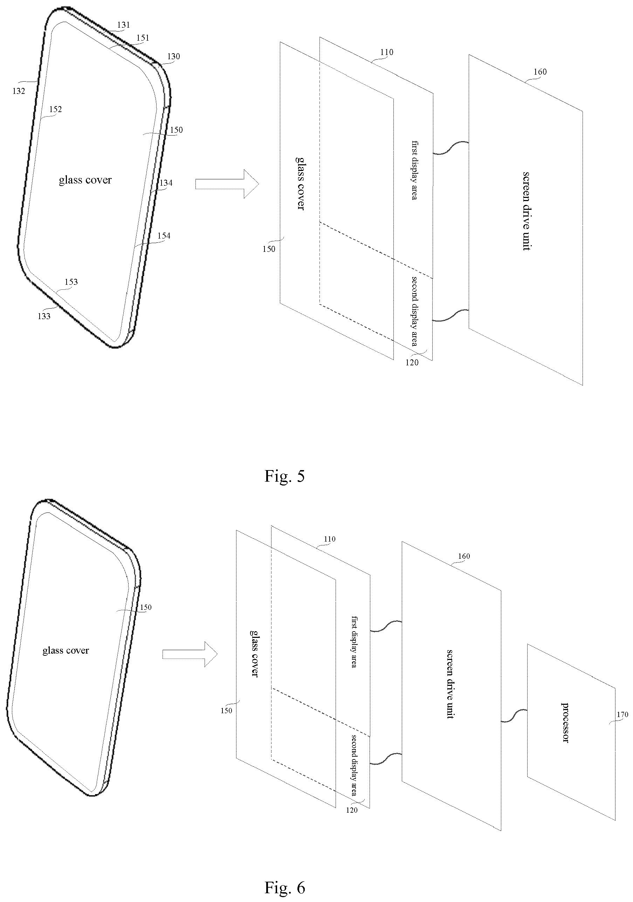

Referring to Fig. 5, which is a structural schematic diagram of a terminal shown in accordance with yet another example. As shown in Fig. 5, the terminal may further include a glass cover 150 and a screen drive unit 160.

The glass cover 150 may be located on the display screen. That is, the glass cover 150 may be located on the first display area 110 and the second display area 120 of the display screen.

The glass cover 150 may include an upper edge 151, a left edge 152, a lower edge 153 and a right edge 154. The upper edge 151 of the glass cover 150 may be coupled with the upper border 131 of the middle frame 130. The left edge 152 of the glass cover 150 may be coupled with the left border 132 of the middle frame 130. The lower edge 153 of the glass cover 150 may be coupled with the lower border 133 of the middle frame 130. The right edge 154 of the glass cover 150 may be coupled with the right border 134 of the middle frame 130.

In some embodiments, referring to Fig. 5, the screen drive unit 160 may be coupled with the display screen. That is, the screen drive unit 160 may be coupled with the first display area 110 and the second display area 120 of the display screen.

In some embodiments, the screen drive unit 160 may be configured to control the display of the first display area 110.

In some embodiments, the screen drive unit 160 may be configured to control the display of the second display area 120.

In some embodiments, the screen drive unit 160 may be configured to control the display of the first display area 110 and the second display area 120.

Referring to Fig. 6, the terminal may further include a processor 170.

The display screen of the terminal may be coupled with the screen drive unit 160. That is, the screen drive unit 160 may be coupled with the first display area 110 and the second display area 120 of the display screen, and the screen drive unit 160 may be coupled with the processor 170.

In some embodiments, the processor 170 may be configured to control the screen drive unit 160 to control the display of the first display area 110.

In some embodiments, the processor 170 may be configured to control the screen drive unit 160 to control the display of the second display area 120.

In some embodiments, the processor 170 may be configured to control the screen drive unit 160 to control the display of the first display area 110 and the second display area 120.

In some embodiments, the processor 170 may be a central processing unit (CPU) or a graphics processing unit (GPU). The processor 170 may be used as an upper computer of the screen drive unit 160.

In the terminals shown in Figs. 1 to 6, the first display area 110 may be configured to implement a display function of an operating system of the terminal.

For example, the first display area 110 displays a main menu interface, an operation interface of an application and so on of the terminal.

In some embodiments, the second display area 120 may be configured to implement a display function of a predetermined function when the terminal is idle. The terminal's being idle may refer to that the terminal is in a standby state, or the first display area 110 is in an off state, or the first display area 110 is in a state as that when it's in the homepage of the display operating system.

For example, the second display area 120 implements clock display, date display, music operation interface and so on when the first display area 110 is not in an operating state.

In some embodiments, the second display area 120 may be configured to implement a display function of a virtual key of the terminal when the first display area 110 is in an operating state.

For example, the second display area 120 displays virtual keys such as return control, home control, menu control and so on when the first display area 110 is in an operating state.

In some embodiments, the second display area 120 may be configured to implement an auxiliary display function of the first display area 110 when the first display area 110 is in an operating state.

For example, the second display area 120 displays a corresponding favorite control, search control and so on when the first display area 110 displays a browser interface.

In some embodiments, the second display area 120 may also be configured to display at least one of a screenshot control, a flashlight switch control, a recording control and a photographing control.

In summary, in the terminal provided in the examples of the present disclosure, the display screen of the terminal is divided into the first display area and the second display area and the second lower edge of the second display area is coupled with the lower border of the middle frame, such that the second display area replaces the key area to increase the screen occupation ratio on the front panel of the terminal.

In addition, an independent display function of the second display area can be realized by means of software design when the first display area turns off, satisfying the display requirements of small functions such as time display to the user and saving the power consumption of the terminal. At the same time, since the display screen is a touch control screen, a key function of the second display area can be realized by means of software design. A control signal can be generated by an operation acting on the second display area to control predetermined operations performed in the first display area such as screen lighting, interface switch and so on, thus realizing linked operations between the first display area and the second display area and enriching the form of screen interaction.

In addition, a glass cover is provided on the display screen, such that the glass cover protects the display screen.

Moreover, by means of coupling the display screen with the screen drive unit and respectively controlling the display of the first display area and the second display area by the screen drive unit, the first display area and the second display area can be independently controlled. Thus, the first display area and the second display area may be controlled to realize different functions.

Additionally, by means of controlling the display of the first display area and the second display area by the screen drive unit, the first display area and the second display area can realize the display function collaboratively.

Furthermore, by means of the coupling the screen drive unit with the processor, the display screen may be controlled by two units separately. The processor may be in charge of control and the screen drive unit may be in charge of screen drive, which improves the control efficiency.

In addition, by means of providing the display screen as an OLED screen, the second display area can still keep being a normal working state when it's in a continuously lighting state, which saves the power consumption of the terminal.

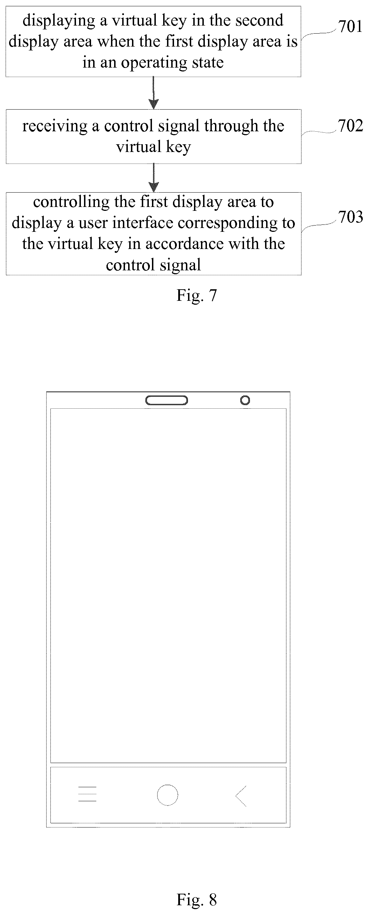

Fig. 7 is a flow chart of a display control method shown in accordance with an example. The display control method may be applied to the terminal in any of the examples shown from Fig. 1 to Fig. 6. The method includes:

Step 701: displaying a virtual key in the second display area when the first display area is in an operating state.

In some embodiments, the virtual key includes at least one of: a menu key, a home key and a return key as shown in Fig. 8. In some embodiments, the virtual key further includes at least one of a favorites key, a search key, a screenshot key, a flashlight switch key, a recording key and a photographing key.

Step 702: receiving a control signal through the virtual key.

In some embodiments, the control signal may be at least one of a click signal, a double-click signal, a long press signal, a floating touch signal and a slide signal. For example, the slick signal may be received through the menu key, the long press signal may be received through the home key, the double-click signal may be received through the return key and so on.

Step 703: controlling the first display area to display a user interface corresponding to the virtual key in accordance with the control signal.

When the control signal is received through the menu key, the first display area is controlled to display a first user interface. The first user interface may include thumbnails of various applications that are operating. The applications include applications that are operating in the foreground and applications that are operating in the background. A user may click the target thumbnail in the first user interface to switch the application that is operating in the foreground to the application corresponding to the target thumbnail.

When the control signal is received through the home key, the first display area is controlled to display a second user interface. The second user interface may be a main user interface of the operating system, which is also referred to as a desktop or a home page.

When the control signal is received through the return key, the first display area is controlled to display a third user interface. The third user interface may be a previous user interface.

In summary, in accordance with the display control method provided in the present disclosure, the second display area may be enabled to achieve the function of keys by way of software designs. An operation may be performed in the second display area to generate a control signal to control the first display area to perform preset operations, such as screen lighting, interface switching and the like. Thus, the coordinated operation between the first display area and the second display area is realized and the form of screen interactions is enriched.

In some embodiments, the terminals shown in Fig. 1 to Fig. 6 may further include a memory storage connected to the processor. The memory storage stores at least one instruction that, when executed by the processor, causes the processor to implement the display control method shown in Fig. 7.

An ordinary person skilled in the art may realize that the units and algorithm steps of various examples described in combination with the embodiments disclosed herein can be realized by electronic hardware or a combination of computer software and electronic hardware. Whether these functions are performed by hardware or software depends on the constraint conditions for specific applications and the design of the technical solutions. Those skilled in the art may implement the described functions with different methods for each specific application, but such an implementation shall not be deemed as going beyond the scope of the present disclosure.

In the examples provided in the present disclosure, it should be understood that the disclosed system, apparatus and method may be realized in other ways. For example, the apparatus examples described above are merely illustrative. For example, the division of the units may be merely a logic function division and there may be other methods for division during implementation. For example, a plurality of units or components may be combined or integrated into another system, or some features may be omitted or not performed. Additionally, the mutual coupling, the direct coupling or the communication connection shown or discussed may be an indirect coupling or communication connection via some interfaces, apparatuses or units in the forms of being electrical, mechanical and so on.

The units described as separated components may be or may not be physically separated, and the components shown as units may be or may not be physical units. That is, they may be located at the same place or may also be distributed in a plurality of network units. Some or all of the units may be selected based on actual needs to realize the object of the solution of the present example.

In addition, the functional units in the examples of the present disclosure may be integrated in one processor. The units may also be present physically separately, and two or more units may also be integrated in one unit.

The functions may be stored in a computer-readable storage medium when the functions are realized in the form of software functional units and sold or used as independent products. Based on this understanding, the technical solutions of the present disclosure essentially or a portion of the technical solutions that contribute to the related art or a portion of the technical solutions may be embodied by a software product. The computer software product may be stored in a storage medium, including several instructions to cause a computer device (which may be a personal computer, a server or a network device and so on) to perform all or part of the steps of the method described in the examples of the present disclosure. The above-mentioned storage medium may include a U-disk, a mobile hard disk, a read-only memory (ROM), a random access memory (RAM), a magnetic diskette or an optical disk which can store program codes.

The foregoing are merely some examples of the present disclosure, and the protection scope of the present disclosure is not limited thereto. Any variations or substitutions readily derived to those skilled in the art without departing from the technical scope of the present disclosure shall be protected by the present disclosure. The protection scope of the present disclosure shall limited by the claims.

## Claims

1. A terminal, comprising: a display screen and a middle frame, wherein the display screen includes a first display area (110) and a second display area (120), and the middle frame (130) includes an upper border (131), a left border (132), a lower border (133) and a right border (134) coupled sequentially;
a left edge of the display screen is coupled with the left border (132) of the middle frame (130), and a right edge of the display screen is coupled with the right border (134) of the middle frame (130);
a lower edge of the display screen is coupled with the lower border (133) of the middle frame (130);
a first upper edge (111) of the first display area (110) is an upper edge of the display screen, a second lower edge (123) of the second display (120) area is the lower edge of the display screen, and a first lower edge (113) of the first display area (110) is a second upper edge (121) of the second display area (120); and
a length of a first left edge (112) of the first display area (110) equals to that of a first right edge thereof (114), a length of a second left edge (122) of the second display area (120) equals to that of a second right edge thereof (124), and the length of the first left edge (112) is greater than that of the second left edge (122).

2. The terminal according to claim 1, wherein
the upper edge of the display screen is coupled with the upper border (131) of the middle frame (130);
or,
at least one of a front camera, an earphone, a microphone, a distance sensor and an optical sensor is provided between the upper edge of the display screen and the upper border (131) of the middle frame (130).

3. The terminal according to claim 1, further comprising a glass cover, wherein
the glass cover (150) is located on the display screen;
an upper edge (151) of the glass cover (150) is coupled with the upper border (131) of the middle frame (130);
a left edge (152) of the glass cover (150) is coupled with the left border (132) of the middle frame (130);
a lower edge (153) of the glass cover (150) is coupled with the lower border (133) of the middle frame (130); and
a right edge (154) of the glass cover (150) is coupled with the right border (134) of the middle frame (130).

4. The terminal according to claim 1, further comprising a screen drive unit (160), wherein
the screen drive unit (160) is coupled with the display screen and configured to control the display of at least one of the first display area (110) and the second display area (120).

5. The terminal according to claim 4, further comprising a processor (170), wherein
the display screen is coupled with the screen drive unit (160), the screen drive unit (160) is coupled with the processor (170), and the processor (170) is configured to control the screen drive unit (160) to control the display of at least one of the first display area (110) and the second display area (120).

6. The terminal according to claim 1, wherein the display screen is an organic light-emitting diode (OLED) screen.

7. The terminal according to claim 1, wherein the first display area (110) is configured to implement a display function of an operating system of the terminal, and/or display functions of various applications in the operating system.

8. The terminal according to claim 1, wherein the second display area (120) is configured to implement a display of a predetermined function when the terminal is idle; or,
the second display area (120) is configured to implement a display function of a virtual key of the terminal when the first display area (110) is in an operating state; or,
the second display area (120) is configured to implement an auxiliary display function of the first display area (110) when the first display area (110) is in an operating state.

9. The terminal according to claim 1, wherein the area of the first display area (110) is greater than that of the second display area (120).

10. The terminal according to claim 1, wherein the display screen is rectangular.

11. The terminal according to claim 1, wherein four vertex angles (115; 116; 125; 126) of the display screen are round angles.

12. A display control method for a terminal with a display screen, wherein the display screen includes a first display area (110) and a second display area (120), a first upper edge (111) of the first display area (110) is an upper edge of the display screen, a second lower edge (123) of the second display area (120) is a lower edge of the display screen, the lower edge of the display screen is coupled with a lower border (133) of a middle frame (130) of the terminal, and a first lower edge (113) of the first display area (110) is a second upper edge (121) of the second display area (120), the method comprising:
displaying (701) a virtual key in the second display area (120) when the first display area (110) is in an operating state;
receiving (702) a control signal through the virtual key; and
controlling (703) the first display area (110) to display a user interface corresponding to the virtual key in accordance with the control signal.

13. The method according to claim 12, wherein the virtual key includes at least one of: a menu key, a home key and a return key;
controlling (703) the first display area to display a user interface corresponding to the virtual key in accordance with the control signal includes:
controlling the first display area (110) to display a first user interface when the control signal is received through the menu key, wherein the first user interface includes thumbnails of various applications that are operating;
controlling the first display area (110) to display a second user interface when the control signal is received through the home key, wherein the second user interface is a main user interface of the operating system; and
controlling the first display area (110) to display a third user interface when the control signal is received through the return key, wherein the third user interface is a previous user interface.

14. A terminal, wherein a display screen of the terminal comprises a first display area (110) and a second display area (120), a first upper edge (111) of the first display area (110) is an upper edge of the display screen, a second lower edge (123) of the second display area (120) is a lower edge of the display screen, the lower edge of the display screen is coupled with a lower border (133) of a middle frame (130) of the terminal, and a first lower edge (113) of the first display area (110) is a second upper edge (121) of the second display area (120);
the terminal further comprises: a processor and a memory storage configured to store at least one instruction, wherein the processor (170) is coupled with the display screen via a screen drive unit (160);
the at least one instruction causes the processor to implement following steps when executed by the processor:
displaying (701) a virtual key in the second display area (120) when the first display area (110) is in an operating state;
receiving (702) a control signal through the virtual key; and
controlling (703) the first display area (110) to display a user interface corresponding to the virtual key in accordance with the control signal.

15. The terminal according to claim 14, wherein the virtual key includes at least one of: a menu key, a home key and a return key;
the at least one instruction further causes the processor (170) to implement following steps when executed by the processor (170):
controlling the first display area (110) to display a first user interface when the control signal is received through the menu key, wherein the first user interface includes thumbnails of various applications that are operating;
controlling the first display area (110) to display a second user interface when the control signal is received through the home key, wherein the second user interface is a main user interface of the operating system; and
controlling the first display area (110) to display a third user interface when the control signal is received through the return key, wherein the third user interface is a previous user interface.
